(19) **Europäisches Patentamt / European Patent Office / Office européen des brevets**

(11) **EP 3 264 430 A1**

(12) **EUROPEAN PATENT APPLICATION**
published in accordance with Art. 153(4) EPC

(43) Date of publication:
**03.01.2018 Bulletin 2018/01**

(21) Application number: **16755445.0**

(22) Date of filing: **23.02.2016**

(51) Int Cl.:
*H01F 1/11* [(2006.01)]    *C01G 49/00* [(2006.01)]
*H01F 1/113* [(2006.01)]

(86) International application number:
**PCT/JP2016/055151**

(87) International publication number:
**WO 2016/136701 (01.09.2016 Gazette 2016/35)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **23.02.2015 JP 2015033397**
**19.02.2016 JP 2016030195**

(71) Applicants:
• **DOWA ELECTRONICS MATERIALS CO., LTD.**
**Chiyoda-ku**
**Tokyo 101-0021 (JP)**
• **DOWA F-TEC CO., LTD.**
**Kume-gun**
**Okayama 708-1523 (JP)**

(72) Inventors:
• **YAMADA, Tomoya**
**Kume-gun, Okayama 708-1523 (JP)**
• **TSUBOI Satoru**
**Kume-gun, Okayama 708-1523 (JP)**
• **AYABE Keisuke**
**Kume-gun, Okayama 708-1523 (JP)**
• **MISHIMA Yasunobu**
**Kume-gun, Okayama 708-1523 (JP)**
• **SENDA Masayasu**
**Kume-gun, Okayama 708-1523 (JP)**

(74) Representative: **Müller-Boré & Partner**
**Patentanwälte PartG mbB**
**Friedenheimer Brücke 21**
**80639 München (DE)**

(54) **FERRITE POWDER FOR BONDED MAGNET, METHOD FOR MANUFACTURING SAME, AND FERRITE BONDED MAGNET**

(57) There is provided a ferrite powder for bonded magnets capable of producing a ferrite bonded magnet having a $BH_{max}$ value of 2.65 MGOe or more when molded in a magnetic field and a method for producing the same, and a ferrite bonded magnet using the same, wherein a compression density is 3.50 g/cm$^3$ or more, and an average value of a (long axis length/short axis length) ratio of ferrite particles having a long axis length of 1.0 $\mu$m or more is, 1.60 or less.

Fig. 1

**Description**

Technical Field

The present invention relates to a ferrite powder for bonded magnets used for producing a bonded magnet and a method for producing the same, and a ferrite bonded magnet using the same.

Description of Related Art

Ferrite sintered magnet (referred to as a "sintered magnet" in some cases in the present invention) is used for a magnet in which a high magnetic force is required. However, the sintered magnet involves inherent problems such that chipping or cracking occurs and polishing is required, resulting in poor productivity, and processing into a complex shape is difficult. In recent years, there is a demand for replacing the sintered magnet with the ferrite bonded magnet (referred to as a "bonded,magnet" in some cases in the present invention). However, when compared to the sintered magnet, a maximum energy product ($BH_{max}$) is poor in the bonded magnet, and therefore in order to replace the sintered magnet with the bonded magnet, property of $BH_{max}$ is requested to be improved in the bonded magnet.

Generally, $BH_{max}$ is determined by a residual magnetic flux density (Br) and a coercive force (Hc).

Here, Br is expressed by the following formula 1, in which density of magnet is indicated by ($\rho$), a saturation magnetization of a magnetic powder is indicated by ($\sigma s$), and an orientation ratio is indicated by ($Br/4\pi ls$).

$$Br = 4\pi \times \rho \times \sigma s \times (\text{orientation ratio}) \dots \text{Formula 1}$$

On the other hand, Hc is described by the theory of crystal anisotropy, shape anisotropy, and a single magnetic domain structure.

In order to produce such a bonded magnet, an applicant of the present invention discloses a method for producing a ferrite powder for bonded magnets in patent document 1.

In patent document 1, the applicant discloses the ferrite powder for bonded magnets obtained by mixing ferrite powders constituted of particles having a plurality of particle sizes. In such a ferrite powder for bonded magnets, there are a plurality of peaks in a particle size distribution.

The compression density of the ferrite powder for bonded magnets is 3.5 g/cm$^3$ or more and a specific surface area is 1.80 m$^2$/g or less, and high filing is achieved without impairing fluidity during molding. As a result, it is possible to improve $\rho$ of formula 1, and a bonded magnet having a maximum energy product of 2.2 MGOe or more can be produced.

Prior Art Document

Patent Document

Patent document 1: Japanese Patent Laid Open Publication No.2010-263201

Summary of the Invention

Problem to be solved by the Invention

However, in recent years, a bonded magnet having a higher magnetic force is demanded in the market.

Therefore, for example, in the field where a high magnetic force of $BH_{max}$ = 2.5 to 4.0 MGOe is required, there is no corresponding bonded magnet and a sintered magnet is used. However, as described above, the sintered magnet involves inherent problems such that chipping or cracking occurs and polishing is required, resulting in poor productivity and processing into a complex shape is difficult.

On the other hand, in recent years, bonded magnets using rare earth magnets are also partially used in this field, but rare earth magnets are expensive, namely, 20 times more expensive than the ferrite magnets and have a problem of being easily rusty.

Under such a circumstance, in the bonded magnet having good workability at a low cost, it is strongly requested to achieve $BH_{max}$ value of 2.5 MGOe or more, preferably 2.65 MGOe or more in applications of AV, OA equipment, small motors such as electrical components of automobiles and magnet rolls of copying machines and magnetic encoders.

The inventors of the present invention have examined a method for further increasing the magnetic force of a bonded magnet. As a result, it is found that in the case of the ferrite powder as described in patent document 1, ferrite powder content (FC) for bonded magnets can be increased, but the orientation ratio (Br/4πls) of the ferrite particles in the bonded magnet is not sufficient.

In view of such a circumstance, the present invention is provided, and an object of the present invention is to provide a ferrite powder for bonded magnets capable of producing a ferrite bonded magnet having a $BH_{max}$ value of 2.65 MGOe or more when molded in a magnetic field, and a method for producing the same, and a ferrite bonded magnet using this ferrite powder for bonded magnets.

Means for solving the Problem

In order to solve the above problems, the inventors of the present invention have studied the reason why the orientation ratio (Br/4πls) of ferrite particles in the bonded magnet is insufficient in the ferrite powder for bonded magnets of a conventional technique.

As a result of the above studies, the inventors of the present invention have found that in the ferrite powder for bonded magnets of the prior art, when molding the bonded magnet in the magnetic field, the particles constituting the ferrite powder cannot be rotated so that its c-axis is parallel to a magnetic field direction, and therefore the orientation ratio is decreased. Due to the decrease of the orientation ratio, it is found that the produced bonded magnet cannot exhibit high magnetic properties as originally expected.

Based on the results of the above study, the inventors of the present invention investigate the cause of hindering the rotation and orientation of the particles constituting the ferrite powder.

Then, it is found that in the method for producing the ferrite powder for bonded magnets according to the prior art, there are at least 10 mass% of plate-like particles having a (long axis length/short axis length) ratio (aspect ratio) of particles exceeding 2.0. It is also found that the plate-like particles are frequently found in coarse ferrite particles having a long axis length of several μm or more and a specific surface area of 1.5 m²/g or less.

These coarse plate-like or almost plate-like ferrite particles cannot be rotated due to, for example, being caught by other particles during molding in the magnetic field of the bonded magnet, and it is difficult for them to be perfectly oriented. Then, the coarse ferrite particles have larger volumes and contribute significantly to magnetic properties in the bonded magnet.

As a result, it is found that the fact that the coarse ferrite particles are not oriented in the magnetic field is a cause of not improving the magnetic properties of the bonded magnets.

In order to solve the abovementioned cause, the inventors of the present invention perform intensive studies and it is found that the ferrite powder for bonded magnets containing coarse ferrite particles having a long axis length/short axis length ratio of 1.6 or less can be obtained despite the long axis length being 1.0 μm or more, by controlling an additive and an oxygen concentration in a predetermined range, the additive being blended in a raw material, and the oxygen concentration being the concentration of oxygen in the atmosphere during a sintering step of causing a ferrite formation reaction and making a particle growth. Then, it is found that the coarse ferrite particles having the long axis length of 1.0 μm or more and the (long axis length/short axis length) ratio of 1.6 or less can be easily rotated and oriented in the magnetic field.

Further, the inventors of the present invention have found that by mixing the ferrite powder containing coarse ferrite particles having a specific surface area of 1.5 m²/g or less (sometimes referred to as "ferrite powder (coarse powder)" in the present invention) and the ferrite powder containing fine ferrite particles having a specific surface area of 5.0 to 15 m²/g, preferably 5.0 to 10 m²/g, and a long axis length of 0.5 μm or less (sometimes referred to as "ferrite powder (fine powder)" in the present invention) at a predetermined ratio, the compression density of the ferrite powder for bonded magnets can be increased to 3.50 g/cm³ or more. As a result thereof, the present invention is completed.

Namely, in order to solve the abovementioned problems, a first invention is a ferrite powder for bonded magnets, wherein a compression density is 3.50 g/cm³ or more, and an average value of a (long axis length/short axis length) ratio of ferrite particles having a long axis length of 1.0 μm or more, is 1.60 or less.

A second invention is the ferrite power for bonded magnets according to the first invention, wherein a standard deviation value of the (long axis length/short axis length) ratio of the ferrite particles having a long axis length of 1.0 μm or more, is 0.45 or less.

A third invention is the ferrite powder for bonded magnets according to the first invention or second invention, wherein a molded material is prepared by performing operations of (1), (2), and (3) described below, and a value of a maximum energy product (inj - BHmax) of the molded material measured by performing operation of (4) is 2.65 MGOe or more.

(1) 93.0 parts by weight of the ferrite powder for bonded magnets, 0.8 parts by weight of a silane coupling agent, 0.8 parts by weight of at least one lubricant selected from a fatty acid type and an alcohol type, 5.4 parts by weight of a polyamide resin (powdery) are mixed in a mixer to obtain a mixture.
(2) The obtained mixture is kneaded at 230 °C to obtain pellets with an average diameter of 2 mm.

(3) The pellets are injection-molded in a magnetic field orientation of 12.0 kOe at a temperature of 290 °C, with a molding pressure set to 85 kgf/cm$^2$, to obtain a columnar molded material having a diameter of 15 mm $\times$ a height of 8 mm (the orientation direction of the magnetic field is a direction along a central axis of the column).

(4) Magnetic properties of the molded material are measured with a BH tracer.

A fourth invention is the ferrite powder for bonded magnets according to any one of the first to third inventions, wherein ferrite powder is one or more kinds selected from strontium ferrite and barium ferrite.

A fifth invention is a ferrite bonded magnet containing the ferrite powder for bonded magnets of any one of the first to fourth inventions and a binder.

A sixth invention is a method for producing a ferrite powder for bonded magnets, including:

granulating a plurality of ferrite raw materials including iron oxide, and obtaining a first granulated material;
sintering the obtained first granulated material at a first temperature, and obtaining a ferrite powder (coarse powder);
granulating a plurality of ferrite raw materials including iron oxide, and obtaining a second granulated material;
sintering the obtained second granulated material at a second temperature lower than the first temperature, and obtaining a ferrite powder (fine powder);
mixing the obtained ferrite powder (coarse powder) and the ferrite powder (fine powder), to obtain a mixed powder; and
adding a mechanical pulverizing force to the obtained mixed powder to obtain a pulverized mixture, and applying annealing to the obtained pulverized mixture,
wherein potassium chloride is contained in the first granulated material,
the first temperature is set to 1230 °C or more and 1300 °C or less,
an oxygen concentration in the atmosphere at the time of sintering the first granulated material is 0.1 volume% or more and 6 volume% or less,
the second temperature is 900 °C or more and 1100 °C or less, and
a mixing ratio of the ferrite powder (coarse powder) and the ferrite powder (fine powder) is 20 parts by weight or more and less than 50 parts by weight based on 100 parts by weight of the ferrite powder (coarse powder).

Advantage of the Invention

The ferrite powder for bonded magnets of the present invention is capable of improving the orientation ratio in a magnetic field, and as a result, a bonded magnet having a $BH_{max}$ value of 2.65 MGOe or more can be produced.

Brief description of the drawings

FIG. 1 is an SEM image of 5000 times magnification of a ferrite powder (coarse powder) according to example 1.
FIG. 2 is an SEM image of 5000 times magnification of a ferrite powder (coarse powder) according to comparative example 6.
FIG. 3 is a graph showing a relationship between a compression density of the ferrite powder for bonded magnets and an average value of the (long axis length/short axis length) ratio of particles having a long axis length of 1.0 $\mu$m or more, according to the present invention.
FIG. 4 is a graph showing a relationship between an average value of the (long axis length/short axis length) ratio of particles having a long axis length of 1.0 $\mu$m or more and $BH_{max}$ of a bonded magnet in the ferrite powder for bonded magnets according to the present invention.
FIG. 5 is an SEM image of 2000 times magnification of a c-axis parallel plane on a coated surface in which ferrite powder (coarse powder) is oriented, according to comparative example 4.
FIG. 6 is an SEM image of 2000 times magnification of a c-axis vertical plane on the coated surface in which ferrite powder (coarse powder) is oriented, according to comparative example 4.

Detailed description of the Invention

The inventors of the present invention have made extensive studies on a constitution for achieving a high magnetization in a bonded magnet, and achieve a ferrite powder for bonded magnets containing coarse ferrite particles having a long axis length of 1.0 $\mu$m or more and having a (long axis length/short axis length) ratio of 1.6 or less when oriented in a magnetic field.

The inventors of the present invention have made extensive studies on a method for producing the ferrite powder for bonded magnets having the abovementioned constitution. Then, it is found that the ferrite powder (coarse powder) can be obtained by containing potassium chloride in a raw material of the ferrite powder of one or more kinds selected from strontium ferrite and barium ferrite, and by controlling a sintering temperature and an oxygen concentration in a predetermined range in a sintering step of causing a ferrite formation reaction and making a particle growth in the raw material of the ferrite powder.

It is also found by the inventors of the present invention, that the ferrite powder for bonded magnets in which coarse ferrite particles having the long axis length of 1.0 μm or more can be easily rotated and oriented in the magnetic field and having high compression density, can be obtained by mixing the abovementioned ferrite powder (coarse powder) and ferrite powder (fine powder) at a predetermined ratio, and a bonded magnet with high magnetic force can be easily produced by using the ferrite powder for bonded magnets having the high compression density.

The present invention will be described hereafter sequentially in an order of 1.) Ferrite powder (coarse powder), 2.) Method for producing the ferrite powder (coarse powder), 3.) Ferrite powder (fine powder), 4.) Method for producing the ferrite powder (fine powder), 5.) Method for producing the ferrite powder for bonded magnets, 6.) Ferrite powder for bonded magnets, and 7.) Bonded magnet produced by using the ferrite powder for bonded magnets.

1.) Ferrite powder (coarse powder)

As described above, the ferrite powder (coarse powder) of the present invention is configured so that an average value of the (long axis length/short axis length) ratio is 1.60 or less. In the present invention, the term "(long axis length/short axis length) ratio" means the average value of the (long axis length/short axis length) ratio, unless otherwise specified.

Here, the effect of the configuration will be described.

Generally, in strontium ferrite and barium ferrite, ferrite particles are anisotropic in particle growth because they grow slowly in the c-axis direction, and particles with a large size exceeding 1.0 μm are likely to plate-like particles in which the (long axis length/short axis length) ratio (aspect ratio) is 2.00 to 6.00. For example, plate-like ferrite powder particles as disclosed in patent document 1 are generated by this anisotropic growth.

On the other hand, the ferrite powder (coarse powder) of the present invention is a ferrite powder in which a (long axis length/short axis length) ratio is 1.60 or less when oriented in a magnetic field. The long axis length may be regarded as a-axis length when the ferrite powder particles are single crystals, and the short axis length may be regarded as c-axis length similarly (for details, see column of <Particle shape (long axis length/short axis length) ratio> in example 1). In the magnetic field, the ferrite particles are oriented so that the c-axis which is an easily magnetized axis is parallel to the magnetic field.

As a result thereof, the ferrite powder (coarse powder) of the present invention having a small ratio of (long axis length/short axis length) means that the shape of the ferrite particle is close to a spherical shape, which means that such ferrite particles are easily rotated and oriented without being inhibited from rotating due to being caught by other particles in the magnetic field.

As a result of studies by the inventors of the present invention, it is confirmed that when the value of the (long axis length/short axis length) ratio of the ferrite powder (coarse powder) is 1.60 or less, the magnetic properties are greatly improved in a case where the bonded magnet is produced using such a ferrite powder (coarse powder), and this is a preferable range. Ideally, the (long axis length/short axis length) ratio in which the long axis length and the short axis length are equal, is around 1.00.

The particle size of the ferrite powder (coarse powder) is 1 μm or more and 10 μm or less, and more preferably 1 μm or more and 5 μm or less in the long axis length. This is because the compression density of the ferrite powder for bonded magnets to be produced can be increased by having the ferrite powder (coarse powder) particle diameter of 1 μm or more. Also, this is because when the particle size of the ferrite powder (coarse powder) is 10 μm or less, and more preferably 5 μm or less, it is possible to avoid decrease of a coercive force and decrease of a strength due to segregation of the bonded magnet to be produced.

The distribution of the value of the (long axis length/short axis length) ratio in the ferrite powder (coarse powder) is preferably narrow. In the present invention, a standard deviation value of the (long axis length/short axis length) ratio of the particles having the long axis length of 1.0 μm or more is smaller than that of the prior art and is 0.45 or less. The 0.45 or less standard deviation value means that the existence ratio of the plate-like particles is smaller. Namely, it is considered that high orientation can be stably obtained by using the ferrite powder (coarse powder) of the present invention as the ferrite powder for bonded magnets.

2.) Method for producing the ferrite powder (coarse powder)

The method for producing the ferrite powder (coarse powder) of the present invention includes:

mixing and granulating a plurality of ferrite raw materials containing iron oxide and potassium chloride to obtain a granulated material;

sintering the obtained granulated material at a temperature of 1230 °C or more and 1300 °C or less in an atmosphere having an oxygen concentration of 0.1 volume% to 6 volume% to obtain a sintered material, and

adding a mechanical pulverizing force to the sintered material into a powder state, and further applying annealing thereto.

Explanation will be given hereafter in an order of (1) Granulating step, (2) Sintering step, and (3) Annealing step.

(1) Granulating step

Iron oxide and strontium carbonate are weighed so that iron oxide : strontium carbonate = 5.5 to 6.0: 1.0 (molar ratio).

0.10 to 3.0 mass% of a flux (oxide, inorganic acid, or a salt thereof) and 0.50 to 5.00 mass% of potassium chloride are added to the weighted material and mixed therewith to obtain a mixture. The mixture is granulated into a diameter of about 3 to 10 mm to obtain a granulated material.

For mixing, a general item such as a Henschel mixer, a universal stirrer, a vibration ball mill or the like may be used. Preferably, the vibrating ball mill is used to increase the uniformity and reactivity of the raw material.

For granulation, well-known items such as pelletizer and roller compactor are used.

Preferable examples of the flux (oxide, inorganic acid, or salt thereof) are bismuth oxide, boric acid, borate, sulfate, silicic acid, silicate and the like. Among them, two or more kinds can be used in combination.

(2) Sintering step

In the present invention, potassium chloride is mixed into a ferrite powder (coarse powder) raw material and subjected to ferrite reaction and particle growth under predetermined sintering conditions, especially in a low oxygen concentration atmosphere. Potassium chloride is volatilized during sintering and the ferrite particles are grown in the vapor, to thereby generate the coarse particles having a low specific surface area. When an addition amount of potassium chloride is 0.50 mass% or more with respect to a main raw material, an effect of promoting particle growth can be obtained. Further, when the addition amount of potassium chloride is 5.0 mass% or less, potassium chloride is completely volatilized in the sintering step and potassium chloride does not remain in the ferrite powder (coarse powder) after the sintering step, which is preferable.

As a result of further studies by the inventors of the present invention, it is clarified that by being sintered in the presence of potassium chloride and in a low oxygen atmosphere, growth of the ferrite powder (coarse powder) particles in the c-axis direction is promoted and particles having a small value of (long axis length/short axis length) ratio are grown. Although a detailed mechanism of the growth of the ferrite powder (coarse powder) particles in the c-axis direction has not been clarified, it can be considered that a composition that is easily isotropically grown as a precursor during sintering is preferentially generated. Also, it can be considered that the structure change occurs in a target ferrite phase after particle growth. It is considered that the oxygen concentration in the atmosphere is 6 volume% or less which is considered to be effective for isotropic particle growth, and more preferably 3 volume% or less. On the other hand, when the oxygen concentration is 0.1 volume% or more, and more preferably 1 volume% or more, formation of a magnetite phase can be avoided, and a target ferrite phase can be obtained, which is preferable.

A sintering temperature is set to 1230 °C or more and 1300 °C or less, and more preferably 1240 °C or more and 1270 °C or less, and a sintering time is set to 10 to 120 minutes, to thereby obtain the sintered material.

This is because when the sintering temperature is 1230 °C or more and the sintering time is 10 minutes or more, the ferrite reaction and the particle growth are sufficiently advanced. Also, this is because when the sintering temperature is 1300 °C or less, pulverization is easily applied to the ferrite powder (coarse powder) particles obtained after sintering, and the sintering time is saturated in 120 minutes.

For adjusting the oxygen concentration in a furnace atmosphere, it is general to introduce an inert gas such as a nitrogen gas or an argon gas into a furnace if it is an external thermal burning facility. In the case of an internal combustion type facility, a supply ratio of a combustion fuel and air or oxygen gas is adjusted and controlled. However, in the case of using the internal combustion type facility, use of an inert gas is not required, which is preferable in terms of a production cost. In either case, moisture in the raw material, carbon dioxide due to decomposition of carbonate, vapor of potassium chloride and the like are generated during sintering, and therefore, in order to discharge them outside the system, it is preferable to perform sintering in a gas flow atmosphere.

As a facility for sintering, a general electric furnace or gas furnace is used. Preferably, a rotary kiln is preferably used for the purpose of making the oxygen concentration uniform in the furnace and for equally applying a thermal history to the sintered material.

(3) Annealing step

The abovementioned sintered material is pulverized by a roller mill or a hammer mill to obtain a coarsely pulverized powder. Further, the coarsely pulverized powder is supplied to a pulverizer to perform pulverization treatment so that the particles are monodispersed. Thereafter, the pulverized powder is annealed at 900 to 1000 °C for 5 to 60 minutes for the purpose of removing distortion by pulverization to obtain ferrite powder (coarse powder) of the present invention.

As the pulverizer, a batch type or continuous type vibration ball mill, a wet type attritor, a jet mill and the like are suitably used. The wet type attritor and the ball mill are preferably used in combination, for the purpose of precisely performing pulverization.

For the annealing treatment, heating equipment such as a general electric furnace or gas furnace may be used.

3.) Ferrite powder (fine powder)

The ferrite powder (fine powder) of the present invention has a specific surface area of 5.0 to 15 $m^2$/g, and preferably 5.0 to 10 $m^2$/g.

The composition of the ferrite powder is one or more kinds selected from strontium ferrite and barium ferrite, and $BaCO_3$ and/or $SrCO_3$ : $Fe_2O_3$ = 1.0 : 5.3 to 6.0 (molar ratio).

4.) Method for producing the ferrite powder (fine powder)

The ferrite powder (fine powder) raw material is granulated into a spherical shape having a diameter of 3 to 10 mm, and the granulated material is dried. The dried granulated material is sintered at a sintering temperature of 900 to 1100 °C, and preferably 1000 to 1100 °C, for a sintering time of 20 to 120 minutes in an air atmosphere, to thereby obtain a sintered material. The obtained sintered material is treated with a hammer mill, a roller mill or the like to obtain a coarsely pulverized powder, and the coarsely pulverized powder is crushed by a vibration mill, a planetary ball mill or the like, and a dry type or a wet type crushing treatment is performed by the ball mill until an amount of the fine powder required for particle size synthesis can be secured, to thereby obtain the ferrite powder (fine powder) of the present invention.

When the wet type crushing treatment is performed, the obtained slurry is filtered to remove a cake, and the obtained cake is dried in the air at about 150°C to obtain a dry cake, and the obtained dry cake is crushed by a mixer or the like.

5.) Method for producing the ferrite powder for bonded magnets

In the present invention, a predetermined amount of ferrite powder (coarse powder), ferrite powder (fine powder), and water are charged into a wet attritor or the like and pulverized to obtain a slurry, and the obtained slurry is filtered to obtain a solid material and the solid material is dried to obtain a dry cake. The obtained dry cake is crushed with a mixer to obtain a crushed material, and the obtained crushed material is pulverized by a vibration ball mill, and the obtained pulverized material is annealed in the atmosphere at 900 °C or more and 1100 °C or less.

By producing the ferrite powder for bonded magnets by the abovementioned method, the compression density of the ferrite powder for bonded magnets can be increased.

In the production of the ferrite powder for bonded magnets, when the mixing ratio of the coarse powder and the fine powder is in a range of 20 parts by weight or more and less than 50 parts by weight based on 100 parts by weight of the coarse powder, an effect of improving the compression density is obtained and the ferrite powder for bonded magnets having a compression density of 3.50 $g/cm^3$ or more can be obtained with high filling factor, which is preferable.

6.) Ferrite powder for bonded magnets

The ferrite powder for bonded magnets of the present invention produced by mixing the ferrite powder (coarse powder) and the ferrite powder (fine powder) has a compression density of 3.50 $g/cm^3$ or more, more preferably 3.55 $g/cm3$ or more, and more preferably 3.60 $g/cm^3$ or more. By increasing the compression density of the ferrite powder for bonded magnets to 3.50$g/cm^3$ or more, the filling factor of the ferrite powder in the bonded magnet can be increased to 93.0 mass% or more.

Further, in the ferrite powder for bonded magnets, the (long axis length/short axis length) ratio of ferrite powder particles having a long axis length of 1 $\mu$m or more, is 1.60 or less, and more preferably 1.50 or less. This is because the average value of the (long axis chart/short axis length) ratio of the ferrite powder particles having the long axis length

of 1.0 $\mu$m or more, is set to 1.60 or less, whereby the particle shape is close to a spherical shape, and the orientation ratio in the magnetic field can be increased during molding of the bonded magnet.

Also, in the ferrite powder for bonded magnets, the specific surface area is preferably 2.60 $m^2$/g or less. By setting the specific surface area to 2.60 $m^2$/g or less, even in a case where the filling factor of the ferrite powder for bonded magnets is as high as 93.0 mass% or more in the production step of the bonded magnet, it is easy to knead the ferrite powder for bonded magnets, the binder, and the surface treatment agent/lubricant, and this is advantageous from a viewpoint of step suitability.

Also, similarly to the ferrite powder (coarse powder) described above, it is preferable that the distribution of the value of the (long axis length/short axis length) ratio in the ferrite powder for bonded magnets of the present invention is preferably narrow. In the present invention, the standard deviation value of the (long axis length / short axis length) ratio of the particles having the long axis length of 1.0 $\mu$m or more is smaller than that of the prior art and is 0.45 or less. The standard deviation value of 0.45 or less means that the existence ratio of the plate-like particles is smaller. That is, it can be considered that by using the ferrite powder (coarse powder) of the present invention as the ferrite powder for bonded magnets, high orientation can be stably obtained.

As a result thereof, the bonded magnet having a high magnetic force of $BH_{max}$ of 2.65 MGOe or more can be produced by kneading the ferrite powder for bonded magnets and a binder, and molding them in a magnetic field.

When the average value of the (long axis length/short axis length) ratio is obtained, about 200 ferrite powder particles having the long axis length of 1.0 $\mu$m or more are selected from the SEM image of the ferrite powder for bonded magnets of the present invention. The (long axis length/short axis length) ratio of the selected ferrite powder particles is added up and divided by the number of the selected ferrite powder particles.

7.) Bonded magnet produced using the ferrite powder for bonded magnets of the present invention.

Production of bonded magnet is performed by kneading the ferrite powder for bonded magnets, binder, and the surface treatment agent/lubricant, and molding them by injection molding in the magnetic field.

The kneading and injection molding in the magnetic field can be performed by a publicly-known method described in patent document 1 for example, and the bonded magnet of the present invention can be thereby produced. However, in addition to this method, various production methods can be used.

As for the binder, materials suitable for the use of the bonded magnet, such as polyamide resin, rubber (BR, SBR, NBR, ACM, FKM, etc.), vinyl chloride, PPS resin and the like can be suitably used.

For the purpose of improving kneadability between the ferrite powder and the resin, a resin for a use as a silane coupling agent, a titanium coupling agent, an organic phosphoric acid compound or the like, or a treatment agent according to the purpose of use can be used as a surface treatment agent.

The lubricant is added for the purpose of improving fluidity during molding. As the lubricant, a hydrocarbon type, a fatty acid type, an alcohol type, an ester type, and the like can be suitably selected and used according to the purpose of use.

At this time, it is important to increase the content of the ferrite powder for bonded magnets as shown in formula 1 to improve the magnetic properties of bonded magnet. In the bonded magnet of the present invention, the content of the ferrite powder for bonded magnets can be 90 mass% or more, and more preferably 93 mass% or more.

As the value of the orientation ratio (Br/4$\pi$Is) of the bonded magnet increases, the number of particles increases with its c-axis oriented in parallel to the magnetic field, and the properties of the bonded magnet are improved. In the bonded magnet of the present invention, the orientation ratio can be set to 0.98 or more.

Generally, when the content of the ferrite powder for bonded magnets is increased, the orientation ratio decreases and a viscosity increases during kneading, thus making it difficult to produce the bonded magnet. However, when the content of the ferrite powder for bonded magnets and the value of the orientation ratio are compatible at a high level as in the present invention, a maximum energy product of $BH_{max}$ being 2.65 MGOe or more can be obtained. The bonded magnet of the present invention having such high magnetic properties is suitably used for AV/OA equipment, small motors or pumps of electrical parts of automobiles, magnet rolls of copying machines, magnetic encoders, and the like.

Examples

(Example 1)

(Production of the ferrite powder (coarse powder))

A method for producing the ferrite powder (coarse powder) will be describe.
Iron oxide and strontium carbonate were weighed so that iron oxide: strontium carbonate = 5.9 : 1.0 (molar ratio). 0.2mass% of boric acid and 2.3 mass% of potassium chloride were added to the weighed material and mixed, and thereafter water was added thereto to be granulated into a spherical shape having a diameter of 3 to 10 mm, to thereby obtain a granulated material.

The obtained granulated material was charged into an internal combustion type rotary kiln and sintered at 1240 °C for 20 minutes, to thereby obtain a sintered material. At this time, an introduction amount of air was adjusted so that the oxygen concentration in the furnace became 3 volume%, to thereby obtain a sintered material.

The obtained sintered material was coarsely pulverized by a roller mill to obtain the ferrite powder (coarse powder).

It was found that the obtained ferrite powder (coarse powder) had a good shape as follows: a specific surface area was 0.83 m²/g, an average value of the long axis length was 3.16 $\mu$m, the (long axis length/short axis length) ratio was 1.50, a maximum value was 2.90, and a standard deviation was 0.39.

Table 1 shows the result thereof.

(Production of the ferrite powder (fine powder))

A method for producing the ferrite powder (fine powder) will be described.

Iron oxide and strontium carbonate were weighed so that iron oxide : strontium carbonate = 5.5 : 1.0 (molar ratio). After the weighed material was mixed, water was added to be granulated into a spherical shape having a diameter of 3 to 10 mm, to thereby obtain a granulated material.

The obtained granulated material was charged into the internal combustion type rotary kiln and sintered at 1050 °C for 20 minutes to obtain a sintered material. At this time, the atmosphere in the furnace was set as the air atmosphere, to thereby obtain the sintered material.

The obtained sintered material was coarsely pulverized with a roller mill and further pulverized using a dry vibration ball mill, to thereby obtain a fine powder. The obtained ferrite powder (fine powder) had a specific surface area of 7.0 m²/g.

Table 1 shows the results thereof.

(Production of the ferrite powder for bonded magnets)

A method for producing the ferrite powder for bonded magnets will be described.

100 parts by weight of the obtained ferrite powder (coarse powder), 42 parts by weight of the ferrite powder (fine powder), and 210 parts by weight of water were charged into a wet attritor, pulverized and mixed, to thereby obtain a slurry. The obtained slurry was filtered to obtain a solid material , and the solid material was dried (at 150 °C for 10 hours in the atmosphere), to thereby obtain a dry cake.

The obtained dry cake was crushed with a mixer to obtain a crushed material, and the obtained crushed material was pulverized by a vibration ball mill to obtain a powder. The obtained powder was annealed in an electric furnace at 970 °C for 30 minutes in the atmosphere, to thereby obtain the ferrite powder for bonded magnets of example 1. The compression density of the obtained ferrite powder for bonded magnets was 3.57 g/cm³.

Table 2 shows the results thereof.

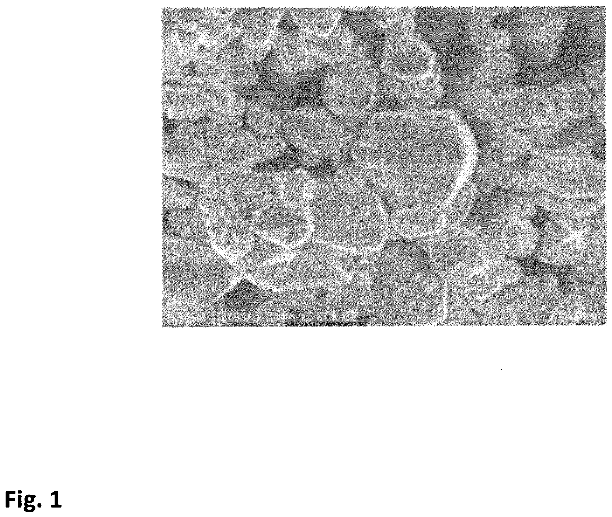

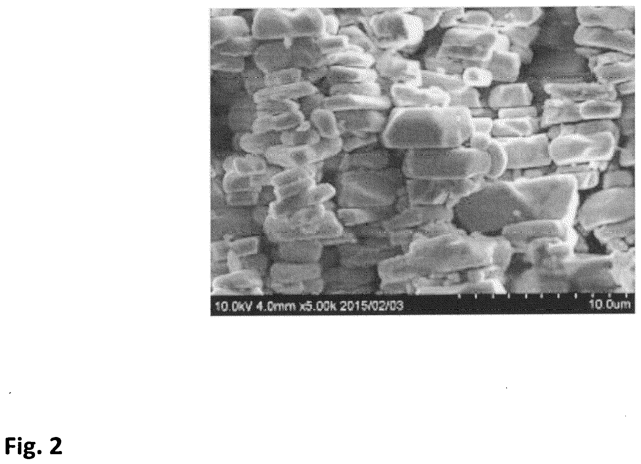

Here, FIG. 1 shows an electron microscopic image (SEM image) of a coarse powder portion in the obtained ferrite powder for bonded magnets of example 1. For comparison, the SEM image of a coarse powder portion in the ferrite powder for bonded magnets of comparative example 6 described later is shown in FIG. 2. Both ferrite powders for bonded magnets are oriented by applying the magnetic field in a direction corresponding to an upward direction with respect to a paper surface.

It is found that the shape of the ferrite powder (coarse powder) particles included in the ferrite powder for bonded magnets of example 1 is close to a spherical shape, and the (long axis length/short axis length) ratio is small. On the other hand, it is found that the shape of the ferrite powder (coarse powder) particles contained in the ferrite powder for bonded magnet of comparative example 6 which is the prior art has a flat plate shape, and the (long axis length/short axis length) ratio is large.

(Production of the bonded magnet)

93.0 parts by weight of the ferrite powder for bonded magnets of example 1, 0.8 parts by weight of a silane coupling agent (Z-6094N manufactured by Dow Corning Toray Co., Ltd.), 0.8 parts by weight of a lubricant (VPN-212P manufactured by Henkel), and 5.4 parts by weight of a powdered polyamide resin (P-1011 F made by Ube Industries, Ltd.) were weighed, charged into a mixer, and mixed to obtain a mixture. The obtained mixture was kneaded at 230 °C to obtain kneaded pellets of example 1 having an average diameter of 2 mm.

The obtained kneaded pellets were charged into an injection molding machine (manufactured by Sumitomo Heavy Industries, Ltd.) and injection-molded at a temperature of 290 °C, with a molding pressure of 8.5 N/mm$^2$ in the magnetic field of 12.0 KOe, to thereby obtain the bonded magnet of example 1 having a columnar shape with a diameter of 15 mm $\times$ a height of 8 mm (the orientation direction in the magnetic field is a direction along a central axis of the column) (F. C 93% mass and 12.0 KOe orientation).

Table 2 shows the values of Br, iHc, BH$_{max}$, $4\pi$Is and the orientation ratio (Br/$4\pi$Is) of the bonded magnet of example 1.

(Measurement method)

Explanation will be given for a measurement method for each kind of ferrite powder produced in example 1 or each kind of properties relating to the bonded magnet. This also applies to example 2 and comparative examples 1 to 6.

<Specific surface area (SSA)>

The specific surface area (SSA) of each kind of ferrite powders was measured using Monosorb manufactured by Yuasa Ionics Co., Ltd. based on the BET method.

<Particle shape (long axis length/short axis length) ratio>

1.) The (long axis length / short axis length) ratio which is a shape index of the ferrite powder (coarse powder) was measured by the following procedure.

(1) 4.5 g of ferrite powder (coarse powder) and 5.7 g of NC clear lacquer are dispersed in a centrifugal ball mill (trade name: PULNERISETTE type 702 manufactured by FRITSCH Co.).
(2) A dispersed coating material was applied on a sheet using an applicator bar, and thereafter the ferrite powder particles are oriented in parallel to a coating surface by applying an orienting magnetic field of 5 kOe (Since the c-axis direction of the ferrite powder (coarse powder) particle is parallel to the coating surface, the particle size in the c-axis direction can be measured by observing the particle from just above the coating surface).
(3) The dried sheet was observed with a scanning electron microscope (S-3400N, manufactured by Hitachi High-Technologies Corporation), and the long axis length and the short axis length of 200 or more particles in a SEM photograph of 5000 times magnification, were measured and the average value and standard deviation $\sigma$ were calculated. The long axis length refers to a maximum value of a distance between straight lines when one particle is sandwiched between two parallel straight lines, and the short axis length refers to a minimum value of a distance between straight lines when one particle is sandwiched between two parallel straight lines.

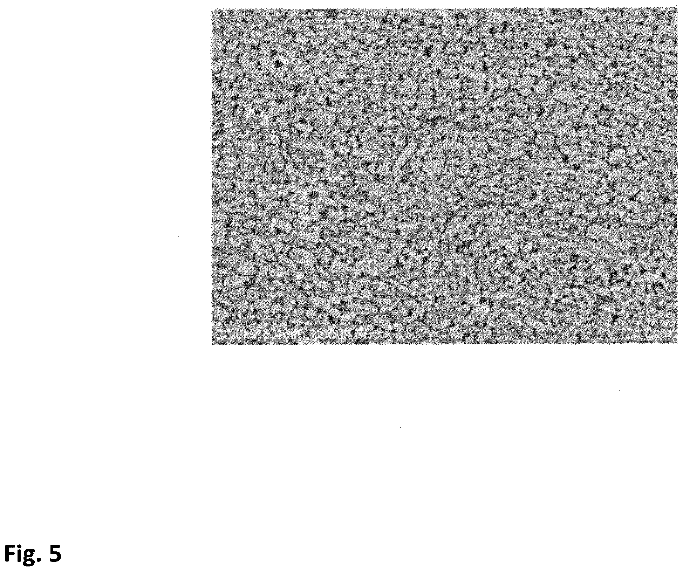

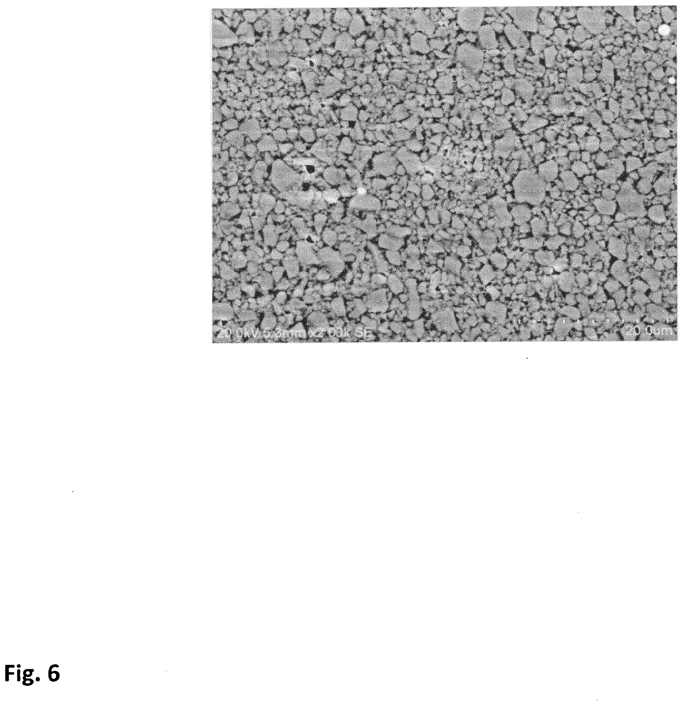

The ferrite powder of comparative example 4 will now be described with reference to FIGs. 5 and 6. FIG. 5 and FIG. 6 are the same coating surfaces, in which FIG. 5 is the SEM image of a c-axis parallel surface, and FIG. 6 is the SEM image of a c-axis vertical surface, at 2000 times magnification respectively. As apparent from a comparison between FIG. 5 and FIG. 6, the measurement value of the ferrite particle size varies depending on an orientation plane. In the present invention, it is important to decrease the aspect ratio in the c-axis parallel plane, that is, to make the particle shape closer to a spherical shape from a plate shape, for improving the properties of the bonded magnet. Therefore, in order to calculate the (long axis length/short axis length) ratio (aspect ratio), the ferrite powder (coarse powder) is oriented, and thereafter the short axis length corresponding to a diameter in the c-axis direction which is a diameter parallel to the c-axis, and the long axis length corresponding to a diameter in the ab-axis direction vertical to the c-axis, are measured as shown in FIG. 5.
2.) The (long axis length/short axis length) ratio of the particles having the long axis length of 1.0 $\mu$m or more in the ferrite powder for bonded magnets, was measured by the following procedure.

As described above, the ferrite powder for bonded magnets of the present invention can be prepared by mixing the ferrite powder (coarse powder) and the ferrite powder (fine powder) at a predetermined ratio and thereafter applying pulverizing, crushing, annealing treatment thereto. Therefore, in the calculation of the (long axis length/short axis length) ratio (aspect ratio), first, an orienting magnetic field of 5 kOe is applied in the same manner as the abovementioned ferrite powder (coarse powder) so that the ferrite powder for bonded magnets is oriented. Next, the SEM image of the oriented surface was observed, and the (long axis length/short axis length) ratio was calculated by selecting about 200 coarse ferrite particles having the long axis length of 1.0 $\mu$m or more, and measuring the diameter of the selected coarse particles parallel to the c-axis surface.

<Compression density (CD)>

CD of the ferrite powder for bonded magnets was obtained by filling a cylindrical mold having an inner diameter of 2.54 cm$\phi$, with 10 g of ferrite powder for bonded magnets, which was then compressed at a pressure of 1 ton/cm$^2$. The density of the ferrite powder for bonded magnets at this time was measured as the compression density (CD).

<Magnetic properties of the bonded magnet>

The magnetic properties of the bonded magnet were measured using a BH tracer (TRF-5BH, manufactured by Toei Kogyo Co., Ltd.) under a measuring magnetic field of 10 kOe.

(Example 2)

The ferrite powder (coarse powder) of example 2 was obtained in the same manner as in example 1, except that in the sintering step of the ferrite powder (coarse powder), the sintering temperature was set to 1265 °C. Table 1 shows the production conditions and properties of the ferrite powder (coarse powder) of example 2.
Next, using the ferrite powder (coarse powder) of example 2, the ferrite powder for bonded magnets of example 2 was produced and the bonded magnet was further obtained in the same manner as in example 1. Table 2 shows the properties of the ferrite powder for bonded magnets and the properties of the bonded magnet of example 2.

(Example 3)

A ferrite powder for bonded magnets of example 3 was obtained in the same manner as in example 2 except that 100 parts by weight of the obtained ferrite powder (coarse powder), 25 parts by weight of the obtained ferrite powder (fine powder), and 210 parts by weight of water were charged into the wet attritor, pulverized and mixed to obtain a slurry. Table 2 shows the production conditions and properties of the ferrite powder for bonded magnets of example 3.
Next, the bonded magnet was obtained in the same manner as in example 1 by using the ferrite powder for bonded magnets of example 3. Table 2 shows the properties of the bonded magnet of example 3.

(Example 4)

The ferrite powder for bonded magnets of example 4 was obtained in the same manner as in example 2 except that 100 parts by weight of the obtained ferrite powder (coarse powder), 33 parts by weight of the obtained ferrite powder (fine powder) and 210 parts by weight of water were charged into the wet attritor, pulverized and mixed to obtain a slurry. Table 2 shows the production conditions and properties of the ferrite powder for bonded magnet of example 4.
Next, the bonded magnet was obtained in the same manner as in example 1 by using the ferrite powder for bonded magnets of example 4. Table 2 shows the properties of the bonded magnet of example 4.

(Example 5)

The ferrite powder for bonded magnets of example 5 was obtained in the same manner as in example 2 except that 100 parts by weight of the obtained ferrite powder (coarse powder), 50 parts by weight of the obtained ferrite powder (fine powder) and 210 parts by weight of water were charged into the wet attritor, pulverized and mixed to obtain a slurry. Table 2 shows the production conditions and properties of the ferrite powder for bonded magnet of example 5.
Next, the bonded magnet was obtained in the same manner as in example 1 by using the ferrite powder for bonded magnets of example 5. Table 2 shows the properties of the bonded magnet of example 5.

(Example 6)

The ferrite powder (coarse powder) of example 6 was obtained in the same manner as in example 1, except that in the sintering step of the ferrite powder (coarse powder), the sintering temperature was set to 1300 °C. Table 1 shows the production conditions and properties of the ferrite powder (coarse powder) of example 6.
Next, using the ferrite powder (coarse powder) of example 6, the ferrite powder for bonded magnets of example 6 was produced and the bonded magnet was further obtained in the same manner as in example 1.
Table 2 shows the properties of the ferrite powder for bonded magnets and the properties of the bonded magnet of example 6.

(Example 7)

The ferrite powder (coarse powder) of example 7 was obtained in the same manner as in example 2 except that in the sintering step of the ferrite powder (coarse powder), an air introduction amount was adjusted so that an oxygen concentration in a furnace becomes 6 volume% to obtain a sintered material when the granulated material was charged into the internal combustion type rotary kiln and sintered at 1265 °C for 20 minutes. Table 1 shows the production conditions and the properties of the ferrite powder (coarse powder) of example 7.

Next, using the ferrite powder (coarse powder) of example 7, the ferrite powder for bonded magnets of example 7 was produced and the bonded magnet was further obtained in the same manner as in example 1. Table 2 shows the properties of the ferrite powder for bonded magnets and the properties of the bonded magnet of example 7.

(Example 8)

The ferrite powder (coarse powder) of example 8 was obtained in the same manner as in example 2 except that in the sintering step of the ferrite powder (coarse powder), an air introduction amount was adjusted so that an oxygen concentration in a furnace becomes 1 volume% to obtain a sintered material when the granulated material was charged into the internal combustion type rotary kiln and sintered at 1265 °C for 20 minutes. Table 1 shows the production conditions and the properties of the ferrite powder (coarse powder) of example 8.

Next, using the ferrite powder (coarse powder) of example 8, the ferrite powder for bonded magnets of example 8 was produced and the bonded magnet was further obtained in the same manner as in example 1. Table 2 shows the properties of the ferrite powder for bonded magnets and the properties of the bonded magnet of example 8.

(Comparative example 1)

The ferrite powder (coarse powder) of comparative example 1 was obtained in the same manner as in example 1 except that in the sintering step of the coarse powder, an electric furnace was used and sintering was performed at 1260 °C under atmospheric release (oxygen concentration: 21 volume%). Table 1 shows the production conditions and the properties of the ferrite powder (coarse powder) of comparative example 1.

Next, using the ferrite powder (coarse powder) of comparative example 1, the ferrite powder for bonded magnets of comparative example 1 was produced and the bonded magnet was further obtained in the same manner as in example 1. Table 2 shows the properties of the ferrite powder for bonded magnets and the properties of the bonded magnet of comparative example 1.

(Comparative example 2)

The ferrite powder (coarse powder) of comparative example 2 was obtained in the same manner as in example 1 except that in the sintering step of the coarse powder, the electric furnace was used and sintering was performed at 1245 °C in a sealed container. At this time, an oxygen concentration during sintering was calculated to be about 10 volume%, from a vapor pressure of potassium chloride, a generation amount of carbon dioxide due to decomposition of strontium carbonate, and a volume of the sealed container. Table 1 shows the production conditions and the properties of the ferrite powder (coarse powder) of comparative example 2.

Next, using the ferrite powder (coarse powder) of comparative example 2, the ferrite powder for bonded magnets of comparative example 2 was produced and the bonded magnet was further obtained in the same manner as in example 1. Table 2 shows the properties of the ferrite powder for bonded magnets and the properties of the bonded magnet of comparative example 2.

(Comparative example 3)

The ferrite powder (coarse powder) of comparative example 3 was obtained in the same manner as in example 1 except that in the sintering step of the coarse powder, the sintering temperature was set to 1210 °C. Table 1 shows the production conditions and properties of the ferrite powder (coarse powder) of comparative example 3.

Next, using the ferrite powder (coarse powder) of comparative example 3, the ferrite powder for bonded magnets of comparative example 3 was produced and the bonded magnet was further obtained in the same manner as in example 1. Table 2 shows the properties of the ferrite powder for bonded magnets and the properties of the bonded magnet of comparative example 3.

(Comparative example 4)

(Production of the ferrite powder (coarse powder))

A method for producing the ferrite powder (coarse powder) will be described.

Iron oxide and strontium carbonate were weighed so that iron oxide : strontium carbonate = 5.6 : 1.0 (molar ratio). 0.1 mass% of boric acid and 1.0 mass% of barium chloride were added to the weighed material and mixed, and thereafter water was added thereto to be granulated into a spherical shape having a diameter of 3 to 10 mm, to thereby obtain a first granulated material. The obtained granulated material was charged into the internal combustion type rotary kiln and sintered at 1280 °C for 20 minutes, to thereby obtain a sintered material. At this time, an air introduction amount was adjusted so that the oxygen concentration in the furnace became 3 volume%.

The sintered material was coarsely pulverized by applying treatment thereto using the roller mill with a roller mill, to thereby obtain the ferrite powder (coarse powder) of comparative example 4. Table 1 shows the production conditions and the properties of the ferrite powder (coarse powder) of comparative example 4.

(Production of the ferrite powder (fine powder) to production of the bonded magnet)

Production of the ferrite powder (fine powder) to production of the bonded magnet will be described.

In the step after production of the coarse powder, the ferrite powder (fine powder) of comparative example 4 was obtained in the same manner as in example 1. Table 1 shows the properties of the obtained ferrite powder (fine powder) of comparative example 4.

Next, the ferrite powder (coarse powder) and the ferrite powder (fine powder) of comparative example 4 were mixed in the same manner as in example 1 to obtain the ferrite powder for bonded magnets of comparative example 4. Table 2 shows the properties of the ferrite powder for bonded magnets of comparative example 4.

Next, using the ferrite powder for bonded magnets of comparative example 4, the bonded magnet of comparative example 4 was obtained in the same manner as in example 1. Table 2 shows the properties of the bonded magnet of comparative example 4.

(Comparative example 5)

(Production of the ferrite powder (coarse powder))

A method for producing the ferrite powder (coarse powder) will be described.

Iron oxide and strontium carbonate were weighed so that iron oxide : strontium carbonate = 5.9 : 1.0 (molar ratio). 0.1 mass% of boric acid and 1.2 mass% of barium chloride were added to the weighed material and mixed, and thereafter water was added thereto to be granulated into a spherical shape having a diameter of 3 to 10 mm, to thereby obtain a first granulated material. The obtained granulated material was charged into the internal combustion type rotary kiln and sintered at 1240 °C for 20 minutes, to thereby obtain a sintered material. At this time, the air introduction amount was adjusted so that the oxygen concentration in the furnace became 5 volume%.

The sintered material was coarsely pulverized by applying treatment thereto using the roller mill, to thereby obtain the ferrite powder (coarse powder) of comparative example 5. Table 1 shows the production conditions and the properties of the ferrite powder (coarse powder) of comparative example 5.

(Production of the ferrite powder (fine powder) to production of the bonded magnet)

In the step after production of the obtained ferrite powder (fine powder), the ferrite powder for bonded magnets of comparative example 5 was obtained in the same manner as in example 1 except that the mixing ratio of the ferrite powder (coarse powder) and the ferrite powder (fine powder) was set to 100 : 25 (weight ratio). Table 2 shows the properties of the obtained ferrite powder for bonded magnets.

Next, using the ferrite powder for bonded magnets of comparative example 5, the bonded magnet of comparative example 5 was obtained in the same manner as in example 1. Table 2 shows the properties of the obtained bonded magnet.

(Comparative example 6)

(Production of the ferrite powder (coarse powder))

A method for producing the ferrite powder (coarse powder) will be described.

Iron oxide and strontium carbonate were weighed so that iron oxide : strontium carbonate = 5.7 : 1.0 (molar ratio). 0.2 mass% of boric acid and 2.2 mass% of barium chloride were added to the weighed material and mixed, and thereafter water was added thereto to be granulated into a spherical shape having a diameter of 3 to 10 mm, to thereby obtain a first granulated material. The obtained granulated material was charged into the electric furnace, and sintered at 1240 °C for 20 minutes under atmospheric release (oxygen concentration: 21 volume%), to thereby obtain a sintered material.

The sintered material was coarsely pulverized by applying treatment thereto using the roller mill, to thereby obtain the ferrite powder (coarse powder) of comparative example 6. Table 1 shows the properties of the ferrite powder (coarse powder) of comparative example 6.

FIG. 2 shows the SEM image of the obtained ferrite powder (coarse powder). It was confirmed that the ferrite powder (coarse powder) had coarse particles with a specific surface area being 0.94 m$^2$/g and the average value of the long axis length being 3.23 $\mu$m.

From the SEM image, it was also found that the (long axis length/short axis length) ratio was large and there was a particle-rich state on the flat plate.

(Production of the ferrite powder (fine powder) to production of the bonded magnet)

Production of the ferrite powder (fine powder) to production of the bonded magnet will be described.

In the step after production of the obtained ferrite powder (fine powder), the ferrite powder for bonded magnets of comparative example 6 was obtained in the same manner as in example 1. Table 2 shows the properties of the obtained ferrite powder for bonded magnets.

Next, using the ferrite powder for bonded magnets of comparative example 6, the bonded magnet of comparative example 6 was obtained in the same manner as in example 1. Table 2 shows the properties of the obtained bonded magnet.

(Conclusion)

By comparing the properties of the ferrite powder (coarse powder) of examples 1 to 8 and comparative examples 1 to 3 shown in table 1, it was confirmed that, the value of the (long axis length/short axis length) ratio became small by performing sintering at a sintering temperature of 1230 °C or more and at a low oxygen concentration such that the oxygen concentration in the atmosphere was 6 volume% or less, under presence of potassium chloride.

Further, from the results of comparative examples 4 to 6, it was found that the ferrite powder (coarse powder) particles having the (long axis length/short axis length) ratio of 1.60 or less could not be obtained when potassium chloride was substituted with barium chloride.

Therefore, it was found that by adding potassium chloride to the raw material which was a feature of the present invention and performing sintering at a low oxygen concentration, the particle closed to a spherical shape with small (long axis length/short axis length) ratio of the ferrite powder (coarse powder) particle could be produced.

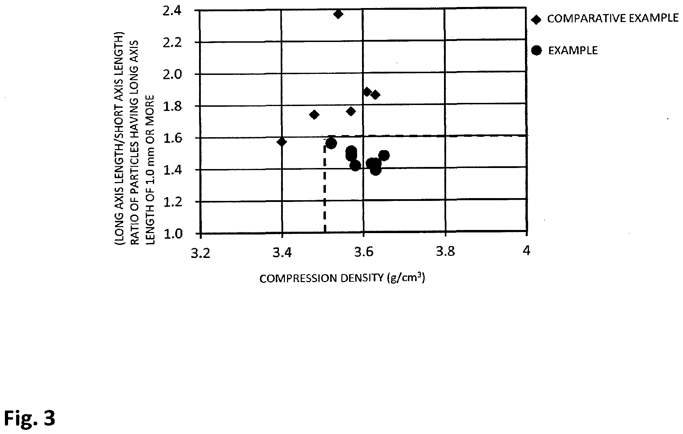

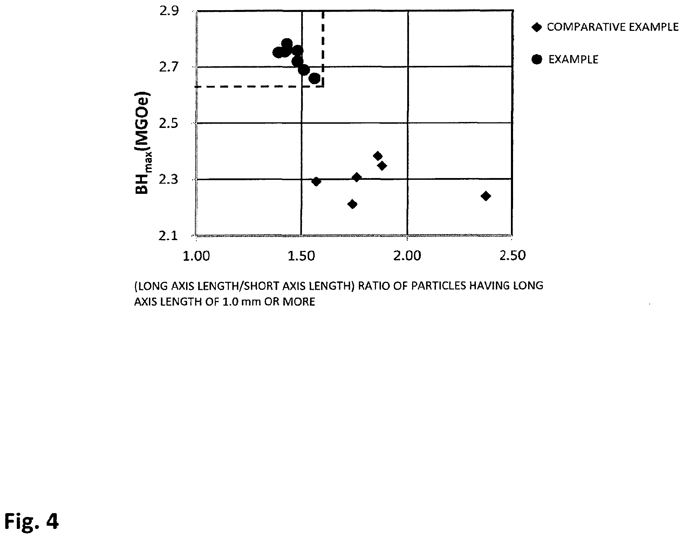

FIG. 3 shows a relationship between a compression density and an average value of the (long axis length/short axis length) ratio of particles having the long axis length of 1.0 $\mu$m or more of the ferrite powder for bonded magnets according to examples and comparative examples. In FIG. 3, data according to the examples are indicated by ●, and data according to the comparative examples are indicated by ♦. This also applies to FIG. 4.

When the compression density is increased by increasing the particle size of the coarse powder, the value of the (long axis length/short axis length) ratio of the ferrite powder of the comparative example of the prior art becomes large, and plate-like particles are likely to be generated. On the other hand, in the ferrite powder of the examples, the above trade-off is improved, thus making it possible to produce the ferrite powder with high compression density, small value of the (long axis length/short axis length) ratio and easy to be oriented.

Table 2 shows the properties of the ferrite powder for bonded magnets in which the ferrite powder (coarse powder) and the ferrite powder (fine powder) of examples and comparative examples are mixed, and the bonded magnet using the ferrite powder for bonded magnets.

The ferrite powder for bonded magnets of the example can be molded in the magnetic field even when made into a bonded magnet powder with high concentration of ferrite content of 93.0 mass%, and further has a high orientation ratio (Br/4$\pi$ls) of 0.98. The high orientation ratio indicates that the particles are likely to be oriented in the magnetic field direction in the magnetic field. As a result, the bonded magnets of examples 1 to 8 exhibited a high energy product in which $BH_{max}$ was 2.66 MGOe or more.

Further, it is found that the standard deviation ($\sigma$) value of the (long axis length/short axis length) ratio of the particles of the ferrite powder (coarse powder) and the ferrite powder for bonded magnets having the long axis length of 1.0$\mu$m or more of examples 1 and 2, is smaller than the standard deviation ($\sigma$) value of the (long axis length/short axis length) ratio of the ferrite powder (coarse powder) and the ferrite powder for bond magnet having the long axis length of 1.0 μm or more of comparative examples.

As described above, it is found that by using the ferrite powder (coarse powder) of examples 1 to 8, it is possible to easily produce the bonded magnet that exerts a high energy product with high quality stability, compared to using the ferrite powder (coarse powder) of the comparative examples. It is also found that the bonded magnets of examples 1 to 8 exhibit a higher energy product with higher quality stability than the bonded magnet of the comparative examples.

FIG. 4 shows a relationship between the average value of the (long axis length/short axis length) ratio of the particles having the long axis length of 1.0 μm or more in the ferrite powder for bonded magnets of the examples and comparative examples, and a maximum energy product of the bonded magnet using the ferrite powder for bonded magnets. As is clarified from FIG. 4, by using the ferrite powder for bonded magnets having a small (long axis length/short axis length) ratio which is the feature of the present invention, the bonded magnet having a larger maximum energy product than the prior art can be produced.

As described above, in the example of the present invention, a polyamide resin was used as a binder for the bonded magnet. An object of the present invention is to obtain the effect by improving the properties of the ferrite powder for bond magnets, and there is no influence by the kind of the binder. Accordingly, various materials such as rubber (BR, SBR, NBR, ACM, FKM, etc.), vinyl chloride, PPS resin and the like generally used for the bond magnet, can be used according to the purpose of use.

As a result of the present invention, the bonded magnet having excellent magnetic properties and high quality stability can be easily produced. Such a bonded magnet is suitably used for small motors such as AV, office automation equipment and electric parts of automobiles, pumps, magnet rolls of copying machines, magnetic encoders, and the like.

[Table 1]

| | | Production conditions of coarse powder | | | | | | | Properties of coarse powder | | | | | Production conditions of fine powder | | | | Propertiesot fine powder |
|---|---|---|---|---|---|---|---|---|---|---|---|---|---|---|---|---|---|---|
| | | Addition amount of iron oxide | Additive | | Flux | | Sintering condition | | SSA | (Long axis/short axis) ratio | | | | Addition amount of iron oxide | Additive /flux | Sintering condition | | SSA |
| | | | Kind | Additive | Kind | Additive | Tempera-ture | Oxygen concentra-tion | | Average | Maxi-mum val-ue | σ | | | | Tempera-ture | Oxygen concentra-tion | |
| | | (Molarra-tio) | | (Mass%) | | (Mass%) | (°C) | (Volume%) | (m2/g) | | | | | (Molar ratio) | | (°C) | (Volume%) | (m2/g) |
| Example | 1 | 5.9 | KCl | 2.3 | Boric acid | 0.2 | 1240 | 3 | 0.83 | 1.50 | 2.90 | 0.38 | 5.5 | None | 1050 | 21 | 7.0 |
| Example | 2 | ↑ | ↑ | ↑ | ↑ | ↑ | 1265 | ↑ | 0.54 | 1.41 | 3.41 | 0.42 | ↑ | ↑ | ↑ | ↑ | ↑ |
| Example | 3 | ↑ | ↑ | ↑ | ↑ | ↑ | ↑ | ↑ | ↑ | ↑ | ↑ | ↑ | ↑ | ↑ | ↑ | ↑ | ↑ |
| Example | 4 | ↑ | ↑ | ↑ | ↑ | ↑ | ↑ | ↑ | ↑ | ↑ | ↑ | ↑ | ↑ | ↑ | ↑ | ↑ | ↑ |
| Example | 5 | ↑ | ↑ | ↑ | ↑ | ↑ | ↑ | ↑ | ↑ | ↑ | ↑ | ↑ | ↑ | ↑ | ↑ | ↑ | ↑ |
| Example | 6 | ↑ | ↑ | ↑ | ↑ | ↑ | 1300 | ↑ | 0.74 | 1.49 | 4.30 | 0.47 | ↑ | ↑ | ↑ | ↑ | ↑ |
| Example | 7 | ↑ | ↑ | ↑ | ↑ | ↑ | 1265 | 6 | 0.68 | 1.56 | 3.64 | 0.46 | ↑ | ↑ | ↑ | ↑ | ↑ |
| Example | 8 | ↑ | ↑ | ↑ | ↑ | ↑ | ↑ | 1 | 0.67 | 1.46 | 3.47 | 0.44 | ↑ | ↑ | ↑ | ↑ | ↑ |
| Compara-tive exam-ple | 1 | ↑ | ↑ | ↑ | ↑ | ↑ | 1260 | 21 | 0.72 | 1.84 | 4.33 | 0.52 | ↑ | ↑ | ↑ | ↑ | ↑ |
| Compara-tive exam-ple | 2 | ↑ | ↑ | ↑ | ↑ | ↑ | 1245 | 10 | 0.74 | 1.78 | 4.21 | 0.54 | ↑ | ↑ | ↑ | ↑ | ↑ |
| Compara-tive exam-ple | 3 | ↑ | ↑ | ↑ | ↑ | ↑ | 1210 | 3 | 1.11 | 1.58 | 4.16 | 0.48 | ↑ | ↑ | ↑ | ↑ | ↑ |

| | | Production conditions of coarse powder | | | | | | | Properties of coarse powder | | | | Production conditions of fine powder | | | | Properties of fine powder |
| | | Addition amount of iron oxide | Additive | | Flux | | Sintering condition | | SSA | (Long axis/short axis) ratio | | | Addition amount of iron oxide | Additive /flux | Sintering condition | | SSA |
| | | | Kind | Additive | Kind | Additive | Temperature | Oxygen concentration | | Average | Maximum value | σ | | | Temperature | Oxygen concentration | |
| | | (Molar ratio) | | (Mass%) | | (Mass%) | (°C) | (Volume%) | (m2/g) | | | | (Molar ratio) | | (°C) | (Volume%) | (m2/g) |
|---|---|---|---|---|---|---|---|---|---|---|---|---|---|---|---|---|---|
| Comparative example | 4 | 5.6 | BaCl₂ | 1.0 | ↑ | 0.1 | 1280 | ↑ | 1.54 | 1.98 | 6.36 | 0.52 | ↑ | ↑ | ↑ | ↑ | ↑ |
| Comparative example | 5 | 5.9 | ↑ | ↑ | ↑ | ↑ | 1240 | 5 | 1.32 | 1.73 | 6.35 | 0.62 | ↑ | ↑ | ↑ | ↑ | ↑ |
| Comparative example | 6 | 5.7 | ↑ | ↑ | ↑ | ↑ | 1290 | 21 | 0.94 | 2.31 | 4.95 | 0.49 | ↑ | ↑ | ↑ | ↑ | ↑ |

[Table 2]

| | | Properties of the ferrite powder for bonded magnets | | | | | | Properties of the bonded magnet (ferrite content of 93.0 mass%) | | | | |
|---|---|---|---|---|---|---|---|---|---|---|---|---|
| | | Coarse powder :Fine powder | (Long axis length/ short axis length) ratio ※ | | | SSA | Compression density | Br | iHc | BHmax | 4πIs | Orientation ratio |
| | | (Mass ratio) | Average | Maximum value | σ | (m²/g) | (g/cc) | (G) | (Oe) | (MGOe) | (G) | (-) |
| Example | 1 | 100:42 | 1.48 | 2.91 | 0.39 | 2.39 | 3.57 | 3330 | 2612 | 2.72 | 3408 | 0.98 |
| Example | 2 | 100:42 | 1.43 | 3.51 | 0.42 | 2.00 | 3.62 | 3364 | 1919 | 2.76 | 3431 | 0.98 |
| Example | 3 | 100:25 | 1.42 | 3.48 | 0.43 | 2.31 | 3.58 | 3350 | 2536 | 2.75 | 3429 | 0.98 |
| Example | 4 | 100:33 | 1.43 | 3.45 | 0.44 | 1.97 | 3.63 | 3375 | 1990 | 2.78 | 3439 | 0.98 |
| Example | 5 | 100:50 | 1.39 | 3.40 | 0.42 | 2.44 | 3.63 | 3339 | 2580 | 2.75 | 3412 | 0.98 |
| Example | 6 | 100:42 | 1.51 | 4.18 | 0.45 | 2.14 | 3.57 | 3324 | 2551 | 2.69 | 3409 | 0.98 |
| Example | 7 | 100:42 | 1.54 | 3.68 | 0.44 | 2.55 | 3.52 | 3320 | 1890 | 2.66 | 3403 | 0.98 |
| Example | 8 | 100:42 | 1.45 | 3.48 | 0.45 | 2.33 | 3.65 | 3345 | 2498 | 2.76 | 3414 | 0.98 |
| Comparative example | 1 | 100:42 | 1.88 | 4.41 | 0.54 | 2.32 | 3.61 | 3135 | 2667 | 2.35 | 3311 | 0.95 |
| Comparative example | 2 | 100:42 | 1.86 | 4.39 | 0.56 | 2.21 | 3.63 | 3163 | 2011 | 2.38 | 3253 | 0.97 |
| Comparative example | 3 | 100:42 | 1.57 | 4.09 | 0.49 | 2.52 | 3.40 | 3083 | 3399 | 2.29 | 3269 | 0.94 |
| Comparative example | 4 | 100:42 | 1.74 | 4.90 | 0.58 | 2.41 | 3.48 | 3070 | 2241 | 2.21 | 3293 | 0.93 |
| Comparative example | 5 | 100:25 | 1.76 | 6.47 | 0.64 | 1.87 | 3.57 | 3157 | 1873 | 2.31 | 3332 | 0.95 |
| Comparative example | 6 | 100:42 | 2.37 | 5.02 | 0.51 | 1.68 | 3.54 | 3098 | 1821 | 2.24 | 3331 | 0.93 |

※ Wherein, (long axis length/short axis length) ratio is the ratio of particles having a long axis length of 1.0 mm or more.

**Claims**

1. A ferrite powder for bonded magnets, wherein a compression density is 3.50 g/cm$^3$ or more, and an average value of a (long axis length/short axis length) ratio of ferrite particles having a long axis length of 1.0 $\mu$m or more, is 1.60 or less.

2. The ferrite power for bonded magnets according to claim 1, wherein a standard deviation value of the (long axis length/short axis length) ratio of the ferrite particles having a long axis length of 1.0 $\mu$m or more, is 0.45 or less.

3. The ferrite powder for bonded magnets according to claim 1 or 2, wherein a molded material is prepared by performing operations of (1), (2), and (3) described below, and a value of a maximum energy product (inj - BH$_{max}$) of the molded material measured by performing operation of (4) is 2.65 MGOe or more.

    (1) 93.0 parts by weight of the ferrite powder for bonded magnets, 0.8 parts by weight of a silane coupling agent, 0.8 parts by weight of at least one lubricant selected from a fatty acid type and an alcohol type, 5.4 parts by weight of a polyamide resin (powdery) are mixed in a mixer to obtain a mixture.
    (2) The obtained mixture is kneaded at 230 °C to obtain pellets with an average diameter of 2 mm.
    (3) The pellets are injection-molded in a magnetic field orientation of 12.0 kOe at a temperature of 290 °C, with a molding pressure set to 85 kgf/cm$^2$, to obtain a columnar molded material having a diameter of 15 mm $\times$ a height of 8 mm (the orientation direction of the magnetic field is along a central axis of the column).
    (4) Magnetic properties of the molded material are measured with a BH tracer.

4. The ferrite powder for bonded magnets according to any one of claims 1 to 3, wherein ferrite powder is one or more kinds selected from strontium ferrite and barium ferrite.

5. A ferrite bonded magnet containing the ferrite powder for bonded magnets of any one of claims 1 to 4 and a binder.

6. A method for producing a ferrite powder for bonded magnets, comprising:

    granulating a plurality of ferrite raw materials including iron oxide, and obtaining a first granulated material;
    sintering the obtained first granulated material at a first temperature, and obtaining a ferrite powder (coarse powder);
    granulating a plurality of ferrite raw materials including iron oxide, and obtaining a second granulated material;
    sintering the obtained second granulated material at a second temperature lower than the first temperature, and obtaining a ferrite powder (fine powder);
    mixing the obtained ferrite powder (coarse powder) and the ferrite powder (fine powder), to obtain a mixed powder; and
    adding a mechanical pulverizing force to the obtained mixed powder to obtain a pulverized mixture, and applying annealing to the obtained pulverized mixture,
    wherein potassium chloride is contained in the first granulated material,
    the first temperature is set to 1230 °C or more and 1300°C or less,
    an oxygen concentration in the atmosphere at the time of sintering the first granulated material is 0.1 volume% or more and 6 volume% or less,
    the second temperature is 900 °C or more and 1100 °C or less, and
    a mixing ratio of the ferrite powder (coarse powder) and the ferrite powder (fine powder) is 20 parts by weight or more and less than 50 parts by weight based on 100 parts by weight of the ferrite powder (coarse powder)..

**Fig. 1**

**Fig. 2**

Fig. 3

(LONG AXIS LENGTH/SHORT AXIS LENGTH) RATIO OF PARTICLES HAVING LONG
AXIS LENGTH OF 1.0 mm OR MORE

**Fig. 4**

**Fig. 5**

**Fig. 6**

## INTERNATIONAL SEARCH REPORT

| International application No. |
| --- |
| PCT/JP2016/055151 |

A. CLASSIFICATION OF SUBJECT MATTER
*H01F1/11*(2006.01)i, *C01G49/00*(2006.01)i, *H01F1/113*(2006.01)i

According to International Patent Classification (IPC) or to both national classification and IPC

B. FIELDS SEARCHED

Minimum documentation searched (classification system followed by classification symbols)
H01F1/11, C01G49/00, H01F1/113

Documentation searched other than minimum documentation to the extent that such documents are included in the fields searched
Jitsuyo Shinan Koho          1922–1996   Jitsuyo Shinan Toroku Koho    1996–2016
Kokai Jitsuyo Shinan Koho    1971–2016   Toroku Jitsuyo Shinan Koho    1994–2016

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>Y | WO 2010/117070 A1 (DOWA Electronics Materials Co., Ltd.), 14 October 2010 (14.10.2010), paragraphs [0015] to [0054], [0115] to [0118] & US 2012/0015189 A1 paragraphs [0024] to [0064], [0125] to [0128] & JP 2010-263201 A    & EP 2418660 A1 & CN 102388423 A    & KR 10-2012-0006500 A | 6<br>1-5 |
| Y | JP 4-224116 A (Kawasaki Steel Corp.), 13 August 1992 (13.08.1992), paragraphs [0007] to [0020] (Family: none) | 1-5 |

☒ Further documents are listed in the continuation of Box C.          ☐ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>06 May 2016 (06.05.16) | Date of mailing of the international search report<br>17 May 2016 (17.05.16) |
| --- | --- |
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (January 2015)

**INTERNATIONAL SEARCH REPORT**

| International application No. |
| --- |
| PCT/JP2016/055151 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | WO 2007/105398 A1  (Hitachi Metals, Ltd.), 20 September 2007 (20.09.2007), paragraphs [0065] to [0074] & US 2009/0218540 A1 paragraphs [0093] to [0106] & JP 4952957 B2         & EP 2006864 A1 & KR 10-2008-0110613 A   & CN 101395680 A | 1-6 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010263201 A